# EUROPEAN PATENT APPLICATION

(11) **EP 3 141 588 A1**
(43) Date of publication of application: **15.03.2017**
(21) Application number: 15788718.3
(22) Date of filing: 07.05.2015
(51) Int. Cl.: C09K 5/06, E04B 1/76

(54) **PRODUCTION METHOD FOR N-PARAFFIN LATENT HEAT STORAGE MATERIAL COMPOSITION, AND MICROCAPSULE HEAT STORAGE MATERIAL**

(30) Priority: 09.05.2014 JP 2014098079; 19.09.2014 JP 2014191671
(71) Applicant: JX Nippon Oil & Energy Corporation, Chiyoda-ku Tokyo 100-8162 (JP)
(72) Inventor: JIN, Zhengzhe, Tokyo 100-8162 (JP); TAKASHIMA, Tsutomu, Tokyo 100-8162 (JP); MORINAGA, Yoshihiro, Tokyo 100-8162 (JP); KAWAGUCHI, Takahiro, Tokyo 100-8162 (JP)
(74) Representative: Leitner, Waldemar
(86) International application number: PCT/JP2015/063841
(87) International publication number: WO 2015/170779

(57) **Abstract**

Provided are a latent heat storage material that functions as a high-capacity heat storage material at a medium-to-low temperature region using a latent heat storage material composition including at least one kind of n-paraffin having 14 to 18 carbon atoms in a total amount of 100 parts by mass (hereinafter referred to as "n-paraffin-based latent heat storage material composition") that contains, as a supercooling preventing agent, an n-alkyl alcohol and/or an n-alkyl amine having 20 to 24 carbon atoms (hereinafter referred to as "n-paraffin derivative"), and is obtained by the following a) step and b) step, a microcapsule heat storage material containing the latent heat storage material as a core material, and a method for producing the same.
a) A step of melting and homogenizing the n-paraffin derivative and the n-paraffin-based latent heat storage material composition at a temperature range of 50 to 100°C.
b) A step of cooling the homogeneous solution obtained in the step to precipitate the n-paraffin derivative in the n-paraffin-based latent heat storage material.

## Description

### Technical Field

The present invention relates to a method for producing an n-paraffin-based latent heat storage material composition and an n-paraffin-based latent heat storage material composition produced by the method in which the solidifying temperature (freezing point) and melting temperature (melting point) of an n-paraffin-based latent heat storage material containing a C14 to C18 n-paraffin, that is, an n-paraffin having a phase transition temperature at a medium-to-low temperature region as a main component are adjusted so as to be very close to each other without largely impairing both heat of melting (endothermic) and heat of solidification (freezing) (exothermic) caused by a phase change occurring at the medium-to-low temperature region.

Further, the present invention relates to a microcapsule heat storage material having the n-paraffin-based latent heat storage material composition as a core material and a cross-linked polymer material as a shell material, and a building material and a refrigerant containing the microcapsule heat storage material.

### Background Art

In recent years, a latent heat storage material using transition heat involved with a phase change between a liquid phase and a solid phase has been used, for example, for a thermal storage air conditioner, a thermal storage building material, various types of warming device and apparatus, and a refrigerant for the purpose of effective use of energy in a living environment. A method using latent heat involved with a phase change has characteristics in which a large amount of heat can be stored at a temperature range where the phase change occurs, a heat storage material volume can be reduced, and heat loss can be minimized due to the absence of a large temperature difference in spite of a large amount of heat storage. Various types of latent heat storage materials using such method have been proposed.

One of typical examples thereof is a latent heat storage material including n-octadecane (melting point: 28.2°C, amount of heat of fusion: 243.6 kJ/kg) and/or n-heptadecane (melting point: 22.2°C, amount of heat of fusion: 168.4 kJ/kg) (hereinafter, collectively referred to as "n-octadecane-based latent heat storage material"). However, in these latent heat storage materials, a supercooling phenomenon of n-octadecane or the like (a difference between the melting point and a decreased solidifying point is increased, and at least one, particularly the solidifying point strays out from a preferred phase transition temperature) occurs depending on a use aspect thereof. In this case, a supercooling preventing material (a material to prevent supercooling) is added in order to decrease the difference (ΔT) between the melting point and the solidifying point.

Patent Literature 1 proposes a composition containing an organic compound having a melting point higher than that of an n-paraffin heat storage material by 40 to 120°C as a supercooling preventing agent in an amount of 0.1 to 30% (wt/wt) relative to the heat storage material. Further, Examples specifically show that carboxylic acid, alcohol, and amide are used as a supercooling preventing agent with respect to an n-paraffin including tetradecane having 14 carbon atoms (melting point: 5.9°C, amount of heat of fusion: 229.8 kJ/kg), pentadecane having 15 carbon atoms (melting point: 9.9°C, amount of heat of fusion: 163.8 kJ/kg), and icosane having 20 carbon atoms (melting point: 36.8°C, amount of heat of fusion: 247.3 kJ/kg), and thus the difference (ΔT) between the melting point and the solidifying point is 2.8°C or lower. However, Patent Literature 1 does not disclose a change of amount of latent heat.

In an example in which ΔT reaches 1.8°C, the supercooling preventing agent is added in an amount as large as 5% (Example 1). In consideration of the matter where the compound added as the supercooling preventing agent does not function as a latent heat storage material, a large decrease in heat capacity of the heat storage material as the whole composition due to the supercooling preventing agent is not avoided. Therefore, it is desirable to specifically investigate and improve the composition.

Cited Reference 1 does not describe an improved C14 to C18 n-paraffin-based latent heat storage material,

Patent Literature 2 proposes a composition containing an amine derivative or alcohol derivative having carbon atoms of which the number is the same as the number of carbon atoms of an n-paraffin heat storage material in an amount of 0.5 to 30% (wt/wt) relative to the heat storage material. A difference in the melting point between n-paraffin and the amine derivative or alcohol derivative having carbon atoms of which the number is the same as the number of carbon atoms of the n-paraffin is generally smaller than 40°C. As understood from contrast of Patent Literature 1, when the difference in the melting point is smaller than 40°C, a supercooling preventing effect on only a specific compound having the same number of carbon atoms is shown.

Specifically, the composition contains an organic compound having the same number of carbon atoms involved with a phase change in an amount of 1 part by weight relative to tetradecane having 14 carbon atoms (melting point: 5.9°C, amount of heat of fusion of 229.8 kJ/kg) and pentadecane having 15 carbon atoms (melting point: 9.9°C, amount of heat of fusion: 163.8 kJ/kg), and ΔT < 1.0°C is achieved. However, Patent Literature 2 does not disclose a change of amount of latent heat.

Note that Cited Reference 2 does not describe the improved C14 to C18 n-paraffin-based latent heat storage material.

As described above, a technique that prevents supercooling while large amount of latent heat of fusion of C14 to C18 n-paraffin-based latent heat storage material is maintained and the phase transition temperature is maintained within about 0°C to about 30°C has not yet been proposed.

### Citation List

### Patent Literature

Patent Literature 1: Japanese Patent Application Laid-Open No. Hei. 05-237368 (Japanese Patent No. 3751028)
Patent Literature 2: Japanese Patent Application Laid-Open No. Hei. 09-31451 (Japanese Patent No. 3739114)

### Summary of Invention

### Technical Problem

The present invention provides a latent heat storage material composition that prevents supercooling while large amount of latent heat of fusion of a C14 to C18 n-paraffin-based latent heat storage material is maintained and the phase transition temperature is maintained within about 0°C to about 30°C, and functions as a high-capacity heat storage material at a medium-to-low temperature region. Also provided are a method for producing the latent heat storage material composition, a microcapsule heat storage material having the latent heat storage material composition as a core material, and a building material and a refrigerant containing the microcapsule heat storage material.

### Solution to Problem

The present inventors have found that in a latent heat storage material composition obtained by a production method of melting and homogenizing an n-alkyl alcohol having 20 to 24 carbon atoms in a C14 to C18 n-paraffin-based latent heat storage material at 50 to 100°C, and cooling the homogeneous solution to precipitate the n-alkyl alcohol, supercooling is prevented while excellent characteristics of the C14 to C18 n-paraffin-based latent heat storage material are exerted. The present invention has thus been completed.

A first aspect of the present invention relates to a method for producing a latent heat storage material composition that contains a latent heat storage material including an n-paraffin having 14 to 18 carbon atoms (hereinafter referred to as "n-paraffin-based latent heat storage material") in a total amount of 100 parts by mass, and an n-alkyl alcohol and/or an n-alkyl amine having 20 to 24 carbon atoms (hereinafter referred to as "n-paraffin derivative") in an amount of 0.5 to 5.0 parts by mass as a supercooling preventing agent, the method including: a) a first step of melting and homogenizing the n-paraffin-based latent heat storage material and the n-paraffin derivative at a temperature range of 50 to 100°C, and b) a second step of cooling the homogeneous solution obtained in the first step to precipitate the n-paraffin derivative in the n-paraffin-based latent heat storage material.

A second aspect of the present invention relates to a latent heat storage material composition obtained by the method according to the first aspect of the present invention.

A third aspect of the present invention relates to the latent heat storage material composition according to the second aspect of the present invention, wherein the n-paraffin-based latent heat storage material includes 1) 100 to 0 parts by mass of n-octadecane (C18), 2) 0 to 100 parts by mass of n-heptadecane (C17), and 3) 0 to 100 parts by mass of n-hexadecane (C16) (the total amount of 1) to 3) is 100 parts by mass).

A fourth aspect of the present invention relates to the latent heat storage material composition according to the second aspect of the present invention, wherein the n-paraffin-based latent heat storage material includes 1) 100 to 0 parts by mass of n-tetradecane (C14), 2) 0 to 100 parts by mass of n-pentadecane (C15), and 3) 0 to 100 parts by mass of n-hexadecane (C16) (the total amount of 1) to 3) is 100 parts by mass).

A fifth aspect of the present invention relates to the latent heat storage material composition according to any one of the second to fourth aspects of the present invention, wherein the n-paraffin derivative is a linear aliphatic alcohol and/or a linear aliphatic amine, each having 22 carbon atoms.

A sixth aspect of the present invention relates to the latent heat storage material composition according to any one of the second to fifth aspects of the present invention, wherein the amount of the n-paraffin derivative contained in the composition is 0.5 to 2.0 parts by mass.

A seventh aspect of the present invention relates to a microcapsule heat storage material having the latent heat storage material composition according to any one of the second to sixth aspects as a core material and a vinyl-based monomer cross-linked copolymer as a shell material.

An eighth aspect of the present invention relates to use of a refrigerant including the microcapsule heat storage material of the seventh aspect of the present invention.

A ninth aspect of the present invention relates to use of a building material including the microcapsule heat storage material of the seventh aspect of the present invention.

A tenth aspect of the present invention relates to use of a refrigerating device including the microcapsule heat storage material of the seventh aspect of the present invention.

An eleventh aspect of the present invention relates to a latent heat storage material composition including a latent heat storage material including an n-paraffin having 14 to 18 carbon atoms (hereinafter referred to as "n-paraffin-based latent heat storage material") in a total amount of 100 parts by mass, and an n-alkyl alcohol and/or an n-alkyl amine having 20 to 24 carbon atoms (referred to as "n-paraffin derivative") in an amount of 0.5 to 5.0 parts by mass as a supercooling preventing agent.

A twelfth aspect of the present invention relates to the latent heat storage material composition according to the eleventh aspect of the present invention, wherein the n-paraffin derivative is a linear aliphatic alcohol and/or a linear aliphatic amine, each having 22 carbon atoms.

### Advantageous Effects of Invention

The C14 to C18 n-paraffin-based latent heat storage material composition according to the present invention can make the production of an industrial product that requires high heat storage property, such as a house construction material and a refrigerant, possible, the production being such that the melting point and the solidifying point are close to each other without occurrence of supercooling while advantages such as a large amount of latent heat of a C14 to C18 n-paraffin-based latent heat storage material and an appropriate phase transition temperature at a medium-to-low temperature region are maintained.

### Description of Embodiments

Hereinafter, suitable embodiments of the present invention will be described in detail.

### <Method for Producing Latent Heat Storage Material Composition>

### <First Step>

In the present invention, an n-paraffin-based latent heat storage material and an n-paraffin derivative are melted and homogenized at a temperature range of 50 to 100°C. Specifically, the amount of n-paraffin derivative to be added is an amount in which the n-paraffin derivative is melted and homogenized in the n-paraffin-based latent heat storage material at a temperature range of 50 to 100°C (hereinafter referred to as "first step") . Melting and homogenizing means that the entire mixture is visually observed to be transparent. For advance of homogenization, the "n-paraffin-based latent heat storage material" containing the "n-paraffin derivative" is placed in a container, the container is immersed in a heat reserving tank (e.g., hot water bath) in which the temperature is kept to a predetermined temperature range of 50 to 100°C., and whether the content becomes transparent within several minutes with shaking is confirmed.

When a microcapsule having the "n-paraffin-based latent heat storage material" according to the present invention as a core is obtained by emulsion polymerization, the temperature during confirmation described above is a polymerization reaction temperature.

According to investigation by the inventors, the n-paraffin derivative part that is insoluble in the n-paraffin-based latent heat storage material at 100°C is excessively contained. This n-paraffin derivative functions as the supercooling preventing agent, but has a large disadvantage in which the amount of latent heat of fusion of the n-paraffin-based latent heat storage material is decreased because of excessiveness. In the present invention, a case where an excess amount of the n-paraffin derivative is added is eliminated by observation of melting and homogenizing through splp. The n-paraffin derivative is extremely homogeneously dispersed in the n-paraffin-based latent heat storage material by homogenization. Therefore, effective expression cf function of preventing supercooling is ensured.

### <Second Step>

Subsequently, the obtained homogeneous solution is cooled, and further cooled and solidified. At the cooling and freezing step, the n-paraffin derivative is precipitated in the n-paraffin-based latent heat storage material. The n-paraffin derivative in a homogenized state that is obtained from a completely melted state is precipitated in a homogeneously dispersed state, and at about 25°C, a part thereof is always precipitated in the system. As a result, a function as the supercooling preventing agent is extremely effectively exerted.

Precipitation may be visually confirmed by clouding of the n-paraffin-based latent heat storage material containing the n-paraffin derivative, and is more accurately confirmed by analysis of DSC characteristic curve. In this precipitation, for example, a temperature region that is higher than the melting point of the n-paraffin-based latent heat storage material by 7°C or higher is used. Specifically, a clear exothermic peak (precipitation) that is shown at a temperature decreasing rate of 5°C/min starting from a temperature of 100°C may be confirmed.

Next, the C14 to C18 n-paraffin-based latent heat storage material composition according to the present invention will be described.

### <n-Paraffin-Based Latent Heat Storage Material>

Examples of the n-C14 to C18 n-paraffin-based latent heat storage material (simply referred to as "n-paraffin-based latent heat storage material") may include C14 to C18 n-paraffins such as n-tetradecane, n-pentadecane, n-hexadecane, n-heptadecane, and n-octadecane.

Those paraffins are usually obtained from refinery of petroleum fraction. For formation of the heat storage material, any one or more paraffins can be selected without particular discrimination.

Example of composition thereof may include a latent heat storage material including n-tetradecane and/or n-pentadecane (simply referred to as "n-tetradecane-based latent heat storage material") and a latent heat storage material including n-octadecane and/or n-heptadecane (simply referred to as ""n-octadecane-based latent heat storage material". These will be described below.

### <n-Octadecane-Based Latent Heat Storage Material>

The n-octadecane-based latent heat storage material according to the present invention is usually obtained from refinery of petroleum fraction. Due to restriction of purification technique, an n-paraffin having a specific number of carbon atoms may contain an n-paraffin having carbon atoms adjacent to the specific number in an amount up to several parts by mass. However, this does not influence achievement of effects of the present invention. Hereinafter, n-octadecane and n-heptadecane containing such impurities are referred to as n-octadecane and n-heptadecane, respectively, without particular distinction.

As a configuration of the n-octadecane-based latent heat storage material, for example, each of n-octadecane and n-heptadecane can be used alone. Two or more kinds thereof can also be used. Examples thereof may include 0 to 100 parts by mass of n-cctadecane (C18), 0 to 100 parts by mass of n-heptadecane (C17), and 0 to 100 parts by mass of n-hexadecane (C16) (the total amount of the three components is 100 parts by mass).

When, within this range, interaction of one to three kinds of n-paraffin-based compounds is optimized, the phase transition temperature is the closest to a comfortable temperature of human, large latent heat inherent to n-octadecane is not largely impaired, and ΔT is decreased to a temperature difference of -8.5 to 2°C.

### <n-Tetradecane-Based Latent Heat Storage Material>

The n-tetradecane-based latent heat storage material according to the present invention is usually obtained from refinery of petroleum fraction. Due to restriction of purification technique, the n-paraffin having a specific number of carbon atoms may usually contain an n-paraffin having carbon atoms adjacent to the specific number in an amount up to several parts by mass. However, this does not influence achievement of effects of the present invention. Hereinafter, the C14 to C18 n-paraffin, n-tetradecane, n-pentadecane, and n-hexadecane containing such impurities are referred to as C14 to C18 n-paraffin, n-tetradecane, n-pentadecane, and n-hexadecane, respectively, without particular distinction.

As a configuration of the n-tetradecane-based latent heat storage material, for example, each of n-tetradecane, n-pentadecane, and n-hexadecane can be used alone. Two or more kinds thereof can also be used. For example, it is preferable that the latent storage material include 0 to 100 parts by mass of n-tetradecane (C14), 0 to 100 parts by mass of n-pentadecane (C15), and 0 to 100 parts by mass of n-hexadecane (C16) (the total amount of the three components is 100 parts by mass).

When, within this range, interaction of one to three kinds of n-paraffin-based compounds is optimized, the phase transition temperature is the closest to a temperature of several degrees centigrade to about 20°C, large latent heat specific to n-tetradecane is not largely impaired, and ΔT is decreased to a temperature difference of -8.5 to 2°C.

### <Supercooling Preventing Agent (n-Paraffin Derivative)>

In the present invention, to the n-paraffin-based latent heat storage material, an n-alkyl alcohol and/or an n-alkyl amine, each having 20 to 24 carbon atoms (hereinafter referred to as "n-paraffin derivative"), is added as a supercooling preventing agent. An n-alkyl alcohol and an n-alkyl amine that have a specific relationship of specific chemical structure to the n-paraffin-based latent heat storage material are known to function as a supercooling preventing agent. In the present invention, further, when the chemical structure, the addition amount, and an addition method thereof form a specific relationship among them, the mixing amount and the content state are optimized to exert specific effects of the present invention.

The n-paraffin derivative according to the present invention is usually chemically synthesized from an n-paraffin derivative as a raw material, and has high affinity with the "n-paraffin-based latent heat storage material." This raw material contains impurities since the raw material obtained by rectification from petroleum fraction contains an n-paraffin having carbon atoms of which the number is adjacent to the number of carbon atoms in an n-paraffin having a specific number of carbon atoms in an amount up to several parts by mass as described above. In the present invention, a purified product needs not be used in particular. Even when the purity is at least about 80% by mass (20% by mass is the amount of unreacted n-paraffin and by-product), there is no problem.

Examples of the n-alkyl alcohol may include arachidylalcohol (20 carbon atoms), heneicosanol (21 carbon atoms), behenylalcohol (22 carbon atoms), tricosanol (23 carbon atoms), and lignoceric alcohol (24 carbon atoms). Behenylalcohol (22 carbon atoms) is the most preferable.

Examples of the n-alkyl amine may include arachidylamine (20 carbon atoms), henicosylamine (21 carbon atoms), behenylamine (22 carbon atoms), tricosylamine (23 carbon atoms), and tetracosylamine (24 carbon atoms).

The present inventors have found that in the n-paraffin-based latent heat storage material in which the phase change temperature region is plus several degrees centigrade to about 28°C, when within usually 0.5 to 5.0 parts by mass, preferably 0.5 to 2.0 parts by mass relative to 100 parts by mass of the "n-paraffin-based latent heat storage material", the amount is adjusted to the smallest addition amount as described above. As such, a supercooling preventing agent to effectively function is an n-alkyl alcohol and/or an n-alkyl amine, each having 20 to 24 carbon atoms ("n-paraffin derivative"). The present invention has thus been completed.

The effects of the present invention are considered to be involved in the carbon chain length (similarity) of the n-paraffin derivative and the polarity (polar difference) of a terminal functional group. In particular, the n-paraffin derivative precipitated in the second step always exists as a crystal due to a difference in the carbon chain length between the n-paraffin-based latent heat storage material and the n-paraffin derivative. Therefore, solidification of the n-paraffin-based latent heat storage material with help of the precipitated crystal as nucleation proceeds very smoothly. As a result, the n-paraffin derivative is considered to effectively prevent a supercooling phenomenon.

### <Microcapsule Heat Storage Material>

Examples in which the effects of the present invention are preferably exerted may include a method for producing a microcapsule heat storage material having, as a core material, the "n-paraffin-based latent heat storage material composition" including the "n-paraffin-based latent heat storage material" and the "n-paraffin derivative" and, as a shell material, a vinyl-based monomer cross-linked copolymer, in which the aforementioned "first step" and "second step" are performed via emulsion polymerization of an O/W emulsion containing the "n-paraffin-based latent heat storage material" and the "n-paraffin derivative" and a vinyl-based monomer as an oil phase.

A reason why this microcapsule heat storage material is a preferable aspect of the latent heat storage material is considered as follows:
1) an aqueous phase is a good heating medium within a range of 50 to 100°C; 2) the oil phase has a fine spherical shape, and the temperature is uniform; and 3) a cross-linked copolymer of the vinyl-based monomer is precipitated from the oil phase in a melted and homogenized state and disposed on an interface (the supercooling preventing agent is melted in the oil phase and is not involved in the reaction).

This production method is performed while the whole temperature of the oil phase having a fine spherical shape is uniformly kept with the participation of water as a good heating medium. From oil droplets (oil phase) (mixture containing the "n-paraffin-based latent heat storage material," the "n-paraffin derivative," and the "vinyl-based monomer") of which the temperature reaches a reaction onset temperature, a polymer of which the molecular weight is increased by progression of the polymerization reaction of the viny-based monomer is precipitated out from the oil phase to form a shell layer. Thus, a microcapsule is formed. At that time, the core phase is finally only the "n-paraffin-based latent heat storage material" and the "n-paraffin derivative", but is in a melted and homogenized state at a temperature that is kept within a range of 50 to 100°C. Through cooling of the microcapsule, the "n-paraffin derivative" homogeneously melted in the core phase is precipitated in the "n-paraffin-based latent heat storage material." Thus, an aspect in which the supercooling preventing function is effectively exerted is found.

The vinyl monomer constituting the shell material of the microcapsule according to the present invention is not particularly limited. At least one kind of vinyl monomer or a compound having a plurality of kinds of vinyl monomers may be used. Specific preferred examples thereof may include a styrenic monomer, a (meth)acrylate-based monomer having a plurality of vinyl groups, and an acrylonitrile-based monomer such as acrylonitrile and methacrylonitrile.

Examples of the styrenic monomer may include a monofunctional styrenic monomer such as styrene, o-, m-, and p-methylstyrenes, α-methylstyrene, p-methoxystyrene, p-tert-butylstyrene, p-phenylstyrene, o-, m-, and p-chlorostyrenes, and o-, m-, and p-ethylstyrenes, and a polyfunctional styrenic monomer such as divinyl benzene and divinyl naphthalene. Of the monofunctional styrenic monomer, styrene is further preferred, and of the polyfunctional styrenic monomer, divinyl benzene is further preferred.

A polyfunctional (meth)acrylate-based monomer having a plurality of vinyl groups is an ester-based compound obtained by a reaction of polyhydric alcohol including diol such as ethylene glycol, triol such as glycerol, and pentaerythritol with acrylic acid or methacrylic acid. For example, ethylene glycol dimethacrylate (EGDMA), diethylene glycol dimethacrylate (DEGDMA), triethylene glycol dimethacrylate (TEGDMA), and trimethylolpropane trimethacrylate (TMPT) are preferred. Two or more kinds of the ester-based compounds may be used.

The acrylonitrile-based monomer and the styrenic monomer correspond to a vinyl monomer having an electron withdrawing group and a vinyl monomer having an electron donating group, respectively. The electron withdrawing group and the electron donating group attract each other to form a charge transfer complex, and alternating copolymerizatlon may be caused. Therefore, in the polymer constituting the shell according to the present invention, a probability of localizing a non-polar group and a polar group is small. Accordingly, the hydrophobicity and the hydrophilicity of chemical structure of the shell material are homogenized, and a microcapsule may have a spherical, pseudospherical, or flat shape. Local permeation or leakage may be prevented on a surface of permeation or leakage of the core material.

A polymerization initiator used for the polymerization reaction according to the present invention is not particularly limited. As a radical polymerization initiator to radically promote polymerization, a general purpose peroxide (or peroxide) compound and a general purpose azo compound can be preferably used.

Preferred examples of the radical polymerization initiator may include tert-butyl peroxyneodecanoate, tert-amyl peroxypivalate, dilauroyl peroxide, tert-amyl peroxy-2-ethylhexanoate, 2,2'-azobis(2,4-dimethylvaleronitrile), 2,2'-azobis(2-methylbutyronitrile), dibenzoyl peroxide, tert-butyl-per-2-ethylhexanoate, di-tert-butyl peroxide, tert-butyl hydroperoxide, 2,5-dimethyl-2,5-di(tert-butyl peroxy)hexane, and cumene hydroperoxide.

A chain transfer agent used for the polymerization reaction according to the present invention is not particularly limited. Preferred examples thereof may include (i) mercaptans including mercaptan (e.g., octylmercaptan, and nor tert-dodecylmercaptan), thiosalicylic acid, mercaptoacetic acid, and mercaptoethanol, (ii) a halogenated compound, and (iii) α-methylstyrene dimer. In particular, mercaptans are further preferred.

A dispersion stabilizer in the O/W dispersion liquid used for the polymerization reaction according to the present invention is not particularly limited. Preferred examples thereof may include partially saponified polyvinyl acetate, a cellulose derivative, and polyvinylpyrrolidone. In particular, partially saponified polyvinyl acetate is further preferred.

In the present invention, a publicly known suspension polymerization device can be used. However, it is preferable that the O/W dispersion liquid be treated by a step of continuously and successively passing the O/W dispersion liquid, before initiation of the polymerization reaction, through a plurality of net bodies that are provided along a flow path at certain intervals. This is because a microcapsule having a narrow particle diameter distribution can be obtained, and a heat storage function and an endothermic mechanism in the structure can be highly uniformly expressed. A perspective view and a cross sectional view of the emulsification device having the net bodies, a perspective view of a spacer, and the like, are disclosed in International Publication No. WO2007/117041.

The O/W dispersion liquid having a predetermined composition is passed in the flow path at a linear velocity of 0.1 to 50 cm/sec. The net bodies are disposed at a plurality of positions in the flow path at certain intervals. The supplied emulsification raw material is successively passed through the net bodies, and at this time, a dispersion phase of the O/W dispersion liquid is made finer, stabilized, and homogenized. The CV value of droplets of the dispersion phase becomes 50% or less, and a value approximate to this value is retained as a CV value of the microcapsule after the polymerization reaction. The inventors consider that a CV value of 30% or less indicates uniform expression of function of the microcapsule. However, it is difficult to obtain this value by a general batch emulsification method.

The mechanism of emulsification by this method, the functional effect of the net bodies, and the like, have not yet been clear. However, it is considered that once a fluid reaches the net body, the fluid is divided by many meshes of the net body into droplets, the droplets are stabilized before they reach the next net body, and as a result, the particle diameter of droplets of the dispersion phase is made uniform. The droplets of the dispersion phase become a core-shell structure in which an n-paraffin is disposed as a core and a vinyl monomer is disposed as a shell.

At these processes, the vinyl monomer, that is, a hydrophilic group may act as a surfactant-like function by forming micelles on a surface of the core and arranging the micelles. In particular, it is considered that the combination of the vinyl monomer compound according to the present invention (combination of hydrophobicity and hydrophilicity) may contribute to the expression of this function.

The distance between the net bodies is involved with the fluid flow velocity in the flow path, the fluid viscosity, or the like, and specifically, the distance is usually 5 mm to 200 mm, and more preferably 10 mm to 100 mm. Herein, when the fluid is passed at a higher flow velocity, a longer distance is used. When the fluid viscosity is higher, it is preferable that a shorter distance be used. Further, it is important that the net bodies are disposed at a plurality of positions along the flow path. It is preferable that the number of position of the bodies be 30 to 200. The aperture of the net bodies is the number of mesh in accordance with ASTM Standard, and is preferably 35 to 4,000, and more preferably 150 to 3,000.

Especially, for a microcapsule having the "n-paraffin-based latent heat storage material" according to the present invention as the core material, the "n-paraffin-based latent heat storage material" can be used as an excellent heat storage material in a construction material such as a plaster board, a fiber reinforced plaster panel, a cement-based wood chipboard, a woody cement board, a light-weight foam concrete, a soil wall beard, a calcium silicate board, a soft fiber board, a woody heat insulating material, a board of construction material, an interior material, a plastered wall, a heat insulating material, a heat shielding material, and wallpaper, and in particular, the n-tetradecane-based latent heat storage material can be used in a refrigerant of a refrigerating device. This is because heat storage property is improved in the vicinity of temperature region of 0°C to 20°C.

### Examples

Hereinafter, the present invention will be specifically described by way of Examples and Comparative Examples, but the present invention is not limited to the following Examples.

### [Examples 1 to 18 and Comparative Examples 1 to 11]

A latent heat storage composition according to the present invention and a microcapsule heat storage material having the same were produced as follows.

### <Latent Heat Storage Composition and Main Component of Microcapsule Heat Storage Material having The Same>

For each chemical used in Examples and Comparative Examples, commercially available products were used as they were.

### <n-Paraffin-Based Heat Storage Material>

"n-octadecane" (C18) ("TS-8 (trade name)" available from JX Nippon Oil & Energy Corporation)

"n-heptadecane" (C17) ("IS-7 (trade name)" available from JX Nippon Oil & Energy Corporation)

"n-hexadecane" (C16) ("TS-6 (trade name)" available from JX Nippon Oil & Energy Corporation)

"n-pentadecane" (C15) ("TS-5 (trade name)" available from JX Nippon Oil & Energy Corporation)

"n-tetradecane" (C14) ("TS-4 (trade name)" available from JX Nippon Oil & Energy Corporation)

### <Vinyl Monomer>

Methacrylonitrile (available from Wako Pure Chemical Industries, Ltd., guaranteed reagent)

Styrene (available from KISHIDA CHEMICAL Co., Ltd., guaranteed reagent)

Ethylene glycol dimethacrylate (EGDMA) (available from Tokyo Chemical Industry Co., Ltd.)

Trimethylol propane trimethacrylate (TMPT) (available from Tokyo Chemical Industry Co., Ltd.)

### <n-Paraffin Derivative>

Behenyl alcohol (n-alkyl alcohol having 22 carbon atoms, available from Tokyo Chemical Industry Co., Ltd., purity: 95% by weight)

### [Melting and Homogenizing of n-Paraffin-Based Heat Storage Material (First Step)]

A sample vial containing a suspension liquid of an "n-paraffin-based heat storage material" and an "n-paraffin derivative" at a predetermined mixing ratio was immersed in a hot water bath of 80°C. The presence or absence of suspension (whether the liquid was clear) was visually observed.

### [Precipitation of n-Paraffin-Based Heat Storage Material (Second Step)]

About 10 mg of the above-described microcapsule heat storage material was weighed in an aluminium pan, and analyzed by a thermogravimetry/differential calorimetry simultaneous measuring device DTG-60 manufactured by Shimadzu Corporation. Appearance of peak (precipitation) corresponding to the n-paraffin derivative under measurement conditions including cooling with a temperature decreasing rate of 5°C/min from an onset temperature of 100°C was confirmed.

### [Production of Microcapsule Heat Storage Material]

### <Emulsification Method>

30 units including a wire mesh made of a main mesh with 3, 000 meshes and a spacer with a length of 10 mm and an internal diameter of 15 mm was inserted into a cylindrical casing with an internal diameter of 20 mm and a length of about 500 mm to construct an emulsification device.

60 parts by mass of the n-paraffin-based heat storage material (for the composition, see Tables 1 to 3) and 0.9 parts by mass of behenyl alcohol as a core material, and 15 parts by mass of methacrylonitrile as a component (A), 15 parts by mass of styrene as a component (B), and 10 parts by mass of ethyleneglycol dimethacrylate as a component (C), as a shell material, were mixed to form an oil phase mixture. To the oil phase mixture further containing 0.8 parts by mass of "trade name PEROCTA O" (chemical name: 1,1,3,3-tetramethylbutyl peroxy-2-ethylhexanoate) available from NOF Corporation as a polymerization initiator, and 1.8 parts by mass of THIOKALCOL 20 (chemical name: n-dodecyl mercaptan) available from Kao Corporation as a chain transfer agent, a dispersant aqueous solution (PVA217EE available from KURARAY CO., LTD., 2 parts by mass) was further added. The oil phase mixture and the dispersant aqueous solution were introduced into the emulsification device at flow velocities of 30 g/min and 60 g/min, respectively, with separate plunger pumps, to cause emulsification. As a result, an O/W emulsion liquid was obtained, and used as a raw material for polymerization.

### <Polymerization Reaction>

60 g of the O/W emulsion liquid obtained by the operation described above and 40 g of distilled water were placed in a container (polymerization tank) equipped with a stirrer, a pressure gauge, and a thermometer. The pressure of the polymerization tank was decreased to remove oxygen in the container, returned to normal pressure using nitrogen, and increased to 0.3 MPa using nitrogen. The temperature of the polymerization tank was increased to 90°C while the stirrer was rotated, to initiate polymerization. The polymerization was terminated in 2 hours, and the temperature of the polymerization tank was cooled to room temperature. A polymerization emulsion liquid was filtered through a filter paper, to isolate a microcapsule heat storage material. The microcapsule heat storage material was dried at 80°C under an atmospheric pressure, to obtain powder of the microcapsule heat storage material.

### <Measurement of Endothermic Characteristics of Heat Storage Material>

About 10 mg of each microcapsule heat storage material was weighed in an aluminium pan, and analyzed by a thermogravimetry/differential thermal simultaneous measuring device DTG-60 manufactured by Shimadzu Corporation. The temperature was increased or decreased under measurement conditions including between -10°C and 35°C and a temperature increasing rate and a temperature decreasing rate of 5°C/min (Tables 1 and 2) or 0.05°C/min (Table 3) (in response to living environment temperature variation). A melting onset temperature (temperature of point at which a tangent line having the maximum inclination of melting peak crossed a base line), a solidifying onset temperature (temperature of point at which a tangent line having the maximum inclination of solidifying peak crossed the base line), and an amount of heat were read. The values are shown in Tables 1 to 3. ΔT is a difference with the melting onset temperature minus the solidifying onset temperature, and is preferably negative. With the repeatedly measurement, the reproducibility of similar endothermic and exothermic peaks was confirmed.

The results of measurement of the characteristic values are shown in Tables 1 to 3.

As clear from the results of Tables 1 to 3, ΔT is negative or is within +0.5 to 2°C for the composition according to the present invention.

**[Table 1]**

| Component Of Microcapsule | Core Material (60 Parts By Mass) | | | | | | Shell Material (40 Parts By Mass) | | | Characteristics Of Heal Storage Material | | |
|---|---|---|---|---|---|---|---|---|---|---|---|---|
| Each Component | n-Paraffin-Based Latent Heal Storage Material (Composition: Part By Mass) | | | | | n-Paraffin Derivative (Supercooling Preventing Agent) (Composition: Part By Mass) | Vinyl Monomer (Composition: Part By Mass) | | | Melting Characteristic | Solidification Characteristic | ΔT |
| Each Characteristic | n-C18 (0-100) | n-C17 (0-100) | n-C16 (0-100) | n-C15 (0-100) | n-C14 (0-100) | C22-OH | Styrene | Methacrylonitrile | EGDMA | Onset Temperature °C | Onset Temperature °C | °C |
| Example 1 | 100 | 0 | 0 | 0 | 0 | 1.5 | 37.5 | 37.5 | 25.0 | 24.1 | 23.6 | 0.5 |
| Example 2 | 70 | 30 | 0 | 0 | 0 | | | | | 20.3 | 22.7 | -2.4 |
| Example 3 | 50 | 50 | 0 | 0 | 0 | | | | | 18.6 | 21.5 | -2.9 |
| Example 4 | 0 | 100 | 0 | 0 | 0 | | | | | 17.8 | 19.6 | -1.8 |
| Example 5 | 0 | 0 | 100 | 0 | 0 | | | | | 15.0 | 14.3 | 0.7 |
| Example 6 | 0 | 0 | 0 | 0 | 100 | | | | | 2.6 | 0.9 | 1.7 |
| Example 7 | D | 0 | 0 | 100 | 0 | | | | | 6.6 | 7.9 | -1.3 |
| Example 8 | 90 | 0 | 10 | 0 | 0 | | | | | 19.7 | 23.7 | -4.0 |
| Example 9 | 0 | 90 | 10 | 0 | 0 | | | | | 16.3 | 18.7 | -2.4 |
| Example 10 | 10 | 80 | 10 | 0 | 0 | | | | | 16.2 | 19.0 | -28 |
| Example 11 | 0 | 0 | 10 | 0 | 90 | | | | | -1.5 | 0.1 | -1.6 |
| Example 12 | 0 | 0 | 10 | 40 | 50 | | | | | 0.9 | 3.2 | -2.3 |
| Example 13 | 0 | 0 | 5 | 20 | 75 | | | | | -0.3 | 1.3 | -1.6 |
| Example 14 | 20 | 20 | 20 | 20 | 20 | | | | | 2.7 | 11.2 | -8.5 |
| Com. Ex.1 | 100 | 0 | 0 | 0 | 0 | 0.0 | | | | 24.8 | 15.3 | 9.5 |
| Com. Ex. 2 | 50 | 50 | 0 | 0 | 0 | | | | | 20.1 | 12.3 | 7.8 |
| Com. Ex. 3 | 0 | 100 | 0 | 0 | 0 | | | | | 17.6 | 9.3 | 8.3 |
| Com. Ex. 4 | 0 | 0 | 100 | 0 | 0 | | | | | 14.8 | 4.5 | 10.3 |
| Com. Ex. 5 | 90 | 0 | 10 | 0 | 0 | | | | | 20.2 | 13.8 | 6.4 |
| Com. Ex. 6 | 85 | 0 | 15 | 0 | 0 | | | | | 20.2 | 13.4 | 6.8 |
| Com. Ex. 7 | 0 | 0 | 0 | 0 | 100 | | | | | 2.8 | -9.3 | 12.1 |

**[Table 2]**

| Component Of Microcapsule | Core Material (60 Parts By Mass) | | | | Shell Material (40 Parts By Mass) | | | Characteristics Of Heal Storage Material | | |
|---|---|---|---|---|---|---|---|---|---|---|
| Each Component | n-Paraffin-Based Latent Heat Storage Material (Composition: Part By Mass) | | n-Paraffin Derivative [Supercooling Preventing Agent] (Composition: Part By Mass) | | Vinyl Monomer (Composition: Part By Mass) | | | Melting Characteristic | Solidification Characteristic | ΔT |
| Each Characteristic | n-C18 | n-C17 | C18-OH | C22-OH | Styrene | Methacrytonitrile | EGDMA | Onset Temperature °C | Onset Temperature °C | °C |
| Example 15 | 85 | 15 | 0 | 1.5 | 37.5 | 37.5 | 25.0 | 21.8 | 24.5 | -2.7 |
| Com. Ex. 8 | 85 | 15 | 3.5 | 0 | | | | 18.6 | 15.9 | 2.7 |
| Com. Ex. 9 | 85 | 15 | 0 | 0 | | | | 19.1 | 16.7 | 2.4 |

**[Table 3]**

| Component Of Microcapsule | Core Material (60 Parts By Mass) | | | Shell Material (40 Parts By Mass) | | | Characteristics Of Heat Storage Material | | |
|---|---|---|---|---|---|---|---|---|---|
| Each Component | n-Paraffin-Based Latent Heat Storage Material (Composition: Part By Mass) | | n-Paraffin Derivative [Supercooting Preventing Agent] (Composition: Part By Mass) | Vinyl Monomer (Composition: Part By Mass) | | | Melting Characteristic | Solidification Characteristic | ΔT |
| Each Characteristic | n-C18 | n-C17 | C22-OH | Styrene | Methacrylonitrile | EGDMA | Onsel Temperature °C | Onset Temperature °C | °C |
| Example 16 | 70 | 30 | 1-8 | 37.5 | 37.5 | 25.0 | 21.5 | 22.3 | -0.8 |
| Example 17 | | | 1.2 | | | | 21.4 | 22.2 | -0.8 |
| Example 18 | | | 0.5 | | | | 21.4 | 22.3 | -0.9 |
| Com. Ex. 10 | | | 0.4 | | | | 21.2 | 11.2 | 10.0 |
| Com. Ex. 11 | | | 0.0 | | | | 21.3 | 11.2 | 10.1 |

### Industrial Applicability

The n-paraffin-based latent heat storage material composition according to the present invention has characteristics in which the material possesses a large amount of latent heat of a C14 to C18 n-paraffin-based latent heat storage material and a phase transition temperature at an appropriate temperature region from the viewpoint of solidification at low temperature. Since the melting point and the solidifying point are close to each other without occurrence of supercooling while the characteristics are maintained, the n-paraffin-based latent heat storage material composition is applied to an industrial product that requires high heat storage property at about 0°C to about 30°C, such as a house construction material and a refrigerant.

## Claims

1. A method for producing a latent heat storage material composition that contains a latent heat storage material including an n-paraffin having 14 to 18 carbon atoms (hereinafter referred to as "n-paraffin-based latent heat storage material") in a total amount of 100 parts by mass, and an n-alkyl alcohol and/or an n-alkyl amine having 20 to 24 carbon atoms (referred to as "n-paraffin derivative") in an amount of 0.5 to 5.0 parts by mass as a supercooling preventing agent, the method comprising:
a) a first step of melting and homogenizing the n-paraffin-based latent heat storage material and the n-paraffin derivative at a temperature range of 50 to 100°C; and
b) a second step of cooling the homogeneous solution obtained, in the first step to precipitate the n-paraffin derivative in the n-paraffin-based latent heat storage material.

2. A latent heat storage material composition obtained by the production method according to claim 1.

3. The latent heat storage material composition according to claim 2, wherein
the n-paraffin-based latent heat storage material includes
1) 10C to 0 parts by mass of n-octadecane (C18),
2) 0 to 100 parts by mass of n-heptadecane (C17), and
3) 0 to 100 parts by mass of n-hexadecane (C16) (provided that a total amount of 1) to 3) is 100 parts by mass).

4. The latent heat storage material composition according to claim 2, wherein
the n-paraffin-based latent heat storage material includes
1) 100 to 0 parts by mass of n-tetradecane (C14),
2) 0 to 100 parts by mass of n-pentadecane (C15), and
3) 0 to 100 parts by mass of n-hexadecane (C16) (provided that a total amount of 1) to 3) is 100 parts by mass).

5. The latent heat storage material composition according to any one of claims 2 to 4, wherein the n-paraffin derivative is a linear alcohol and/or a linear amine, each having 22 carbon atoms.

6. The latent heat storage material composition according to any one of claims 2 to 5, wherein the amount of the n-paraffin derivative contained in the composition is 0.5 to 2.0 parts by mass.

7. A microcapsule heat storage material comprising: the latent heat storage material composition according to any one of claims 2 to 6 as a core material; and a vinyl-based monomer cross-linked copolymer as a shell material.

8. Use of a refrigerant comprising the microcapsule heat storage material according to claim 7.

9. Use of a building material comprising the microcapsule heat storage material according to claim 7.

10. Use of a refrigerating device comprising the microcapsule heat storage material according to claim 7.

11. A latent heat storage material composition comprising:
a latent heat storage material including an n-paraffin having 14 to 18 carbon atoms (hereinafter referred to as "n-paraffin-based latent heat storage material") in a total amount of 100 parts by mass; and
an n-alkyl alcohol and/or an n-alkyl amine having 20 to 24 carbon atoms (referred to as "n-paraffin derivative") in an amount of 0.5 to 5.0 parts by mass as a supercooling preventing agent.

12. The latent heat storage material composition according to claim 11, wherein the n-paraffin derivative is a linear aliphatic alcohol and/or a linear aliphatic amine, each having 22 carbon atoms.
